# EUROPÄISCHE PATENTSCHRIFT

(11) **EP 2 475 607 B1**
(45) Veröffentlichungstag und Bekanntmachung des Hinweises auf die Patenterteilung: **05.10.2016**
(21) Anmeldenummer: 10745151.0
(22) Anmeldetag: 06.08.2010
(51) Int. Cl.: B66C 1/66, B60P 7/08, F16G 15/08

(54) **RINGBOCK MIT AXIALSICHERUNG**
LOAD RING HAVING AN AXIAL SECURING ELEMENT
SUPPORT ANNULAIRE À FIXATION AXIALE

(30) Priorität: 08.09.2009 DE 102009040524
(43) Veröffentlichungstag der Anmeldung: 18.07.2012
(73) Patentinhaber: RUD Ketten Rieger & Dietz GmbH u. Co. KG, 73432 Aalen (DE)
(72) Erfinder: SMETZ, Reinhard, 86720 Nördlingen-Kleinerdlingen (DE); BETZLER, Michael, 73453 Abtsgmünd (DE)
(74) Vertreter: Grünecker Patent- und Rechtsanwälte PartG mbB
(86) Internationale Anmeldenummer: PCT/EP2010/004821
(87) Internationale Veröffentlichungsnummer: WO 2011/029505

(56) Entgegenhaltungen:
- DE-A1- 19 716 734
- DE-U1- 8 905 860
- DE-U1- 29 816 462
- DE-U1-202005 012 945

## Beschreibung

Die Erfindung betrifft eine Vorrichtung zum Anschlagen, Heben und/oder Zurren von Gütern, mit einem Ringbock, der eine Ringlasche mit zwei Haltezapfen und zwei an einem Gut befestigbare Befestigungsböcke mit jeweils einer Halteaufnahme, in denen die Ringlasche über ihre Haltezapfen gehalten ist, aufweist.

Ferner betrifft die Erfindung ein Verfahren zum Montieren einer solchen Vorrichtung zum Anschlagen, Heben und/oder Zurren von Gütern.

Vorrichtungen zum Anschlagen, Heben und/oder Zurren von Gütern, mit einem Ringbock, sind allgemein bekannt. Die Befestigungsböcke werden an einem Gut, zum Beispiel einem Überseecontainer, befestigt, wobei die Befestigungsböcke mit dem Gut beispielsweise verschweißt oder verschraubt werden können. Bevor die Befestigungsböcke am Gut angebracht werden, müssen sie auf die beiden Haltezapfen der Ringlasche aufgesteckt werden. Weisen die Haltezapfen voneinander weg und sind bis in eine Arbeitsposition in die Befestigungsböcke eingeschoben am Gut fixiert, so begrenzen die Befestigungsböcke Bewegungen der Ringlasche parallel zu einer Längsachse der Haltezapfen. Die Haltezapfen können nicht mehr aus den Halteaufnahmen der Befestigungsböcke entfernt und die am Gut fixierten Befestigungsböcke nicht mehr verschoben werden.

Aus der DE 298 16 462 U1 ist ein Ringbock bekannt, bei dem am Befestigungsteil eine Vielzahl von Distanznocken vorhanden ist, um eine Einhaltung des Mindestluftspaltes zwischen dem Befestigungsteil und einer Basis zu gewährleisten.

Für die Sicherheit während des Anschlag-, Hebe- und/oder Zurrvorgangs ist es wichtig, dass die Haltezapfen in einer Einsteckrichtung weit genug in die Halteaufnahmen eingreifen und somit eine Überbelastung der Haltezapfen während des Betriebs vermieden wird. Der maximale Eingriff der Haltezapfen in die Halteaufnahmen ist mit der Befestigung der Befestigungsböcke am Gut festgelegt und kann nachträglich ohne Zerstörung und Neuherstellung der Befestigung nicht mehr verändert werden. In der Praxis kommt es vor, dass die Befestigungsböcke zu weit voneinander beabstandet am Gut befestigt werden und wenigstens einer der Haltezapfen nur unzureichend in die Halteaufnahme ragt. Diese unzureichende Verbindung zwischen Haltezapfen und Halteaufnahme kann im Betrieb zu einem Bruch des Haltezapfens führen, wodurch das Gut, beispielsweise bei einem Hebevorgang, abstürzen und Personen oder Gegenstände gefährdet.

Es ist daher die Aufgabe der Erfindung, eine Vorrichtung bereitzustellen, deren Ringbock leichter zu montieren ist und eine größere Sicherheit bei Anschlag-, Hebe- und/oder Zurrvorgängen gewährleistet.

Diese Aufgabe wird für die eingangs genannte Vorrichtung erfindungsgemäß durch wenigstens eine Axialsicherung gelöst, durch welche der Haltezapfen in einer vorbestimmten axialen Arbeitsposition in der Halteaufnahme gesichert ist. Für das eingangs genannte Verfahren wird die Aufgabe dadurch gelöst, dass wenigstens einer der Haltezapfen in axialer Richtung in der Halteaufnahme festgelegt wird.

Durch diese einfache Maßnahme ist der Haltezapfen in der Arbeitsposition gegen unerwünschte axiale Verschiebungen gesichert. Die Axialsicherung bzw. axiale Festlegung erlaubt zudem eine einfache und sichere Vormontage des Ringbocks. Die Befestigungsböcke sind bereits vor der Anbringung am Gut in der Arbeitsposition positioniert, so dass sie und nicht mehr ohne Weiteres von den Haltezapfen abrutschen können. Der vormontierte Ringbock ist einteilig handhabbar und kann einfach mit dem Gut verbunden werden, ohne dass Gefahr besteht, die Befestigungsböcke zu weit auseinander anzubringen.

Die erfindungsgemäße Lösung kann durch verschiedene, jeweils für sich vorteilhafte, beliebig miteinander kombinierbare Ausgestaltungen weiter verbessert werden. Auf diese Ausgestaltungsformen und die mit ihnen verbundenen Vorteile ist im Folgenden eingegangen, wobei die konstruktiven Maßnahmen und deren Wirkungen lediglich beispielhaft nur für einen Haltezapfen und eine Halteaufnahme beschrieben sind. Selbstverständlich können beide Haltezapfen der Ringlasche und die Halteaufnahmen der beiden Befestigungsböcke die nachstehenden vorteilhaften Ausgestaltungen aufweisen.

Um den auf den Haltezapfen aufgesteckten Befestigungsbock mit der Ringlasche zu verbinden und gegen ein ungewolltes Verschieben zu sichern, können der Befestigungsbock und der Haltezapfen über die Axialsicherung in der Arbeitsposition arretiert sein. Die Arretierung kann über eine Verrastung und/oder Verschraubung erfolgen.

Die Axialsicherung kann ferner ein Halteelement und ein im Haltezapfen und/oder im Befestigungsbock ausgebildetes Aufnahmevolumen aufweisen, in welches das Halteelement wenigstens in der Arbeitsposition des Haltezapfens ragt. Das vorzugsweise in axialer Richtung formschlüssig und unverschieblich gehaltene Halteelement dient dazu, den Haltezapfen und die Halteaufnahme in der Arbeitsposition zu sichern. Dies kann durch einen Formschluss oder einen Reibschluss erfolgen, wie nachstehend erläutert ist. Das Halteelement kann aus einem Metall und beispielsweise aus Stahl gefertigt sein.

Bei einer reibschlüssig gesicherten Arbeitsposition ist das Halteelement bevorzugt in einem Teilvolumen des Aufnahmevolumens aufgenommen, das sich ausschließlich im Haltezapfen oder in der Halteaufnahme befindet. Das Halteelement kann in der Arbeitsposition bevorzugt gegen einen dem Teilvolumen gegenüberliegenden Abschnitt der Halteaufnahme oder des Haltezapfens gepresst sein. Folglich kann der Befestigungsbock nicht mehr vom Haltezapfen abrutschen und der Haltezapfen ist in seiner Arbeitsposition gesichert. Zur Erzeugung des Reibschlusses und der hierfür notwendigen Anpresskraft kann das Halteelement in der Arbeitsposition elastisch verformt sein. Besonders vorteilhaft ist es, wenn das Halteelement sich, eine Gegenkraft aufbringend, unter dem Einfluss des Haltezapfens und/oder der Halteaufnahme verformt, wodurch der Reibschluss verstärkt wird. Beispielsweise kann das Halteelement aus Federstahl gefertigt sein.

Da eine reibschlüssige Sicherung der axialen Lage des Haltezapfens nicht in allen Fällen ausreichend ist, kann die Sicherung auch formschlüssig erfolgen. Hierzu kann jeweils wenigstens ein Teilvolumen des Aufnahmevolumens sowohl im Haltezapfen als auch in der Halteaufnahme ausgebildet sein, wobei die Teilvolumina von Haltezapfen und Halteaufnahme in der Arbeitsposition aneinander angrenzen oder sogar ineinander übergehen können. Bei dieser Ausgestaltung ist also das Halteelement sowohl im Haltezapfen als auch in der Haltaufnahme aufgenommen und stellt dadurch eine formschlüssige Verbindung zwischen den beiden her. Der Haltezapfen und der Befestigungsbock sind also durch das Halteelement arretiert bzw. verrastet, wodurch sich eine noch stabilere Fixierung des Haltezapfens in seiner axialen Arbeitsposition ergibt.

Unabhängig davon, ob die axiale Sicherung der Arbeitsposition durch einen Reibschluss oder einen Formschluss erfolgt, kann das Halteelement in Umfangsrichtung einen Reibschluss erzeugen. So kann die Ringlasche in einer Ausgestaltung um die Längsachse des Haltezapfens schwenk- oder drehbar mit dem Befestigungsbock verbunden sein, um die im Betrieb auftretenden Belastungen optimal aufzunehmen. Hierzu können die Halteaufnahmen Drehlager für die Haltezapfen ausbilden. Drückt das in der Arbeitsposition radial vorgespannte Halteelement gegen den Haltezapfen und/oder die Halteaufnahme, so wirkt der Reibschluss auf die Drehbewegung und dämpft diese.

Sollte der durch die radialelastische Spannung hervorgerufene Reibschluss des Halteelements mit den Haltezapfen und/oder der Halteaufnahme zu gering sein, kann das Halteelement zusätzlich gegen einige der Wandabschnitte der Vertiefungen gedrückt werden. Hierdurch wird zusätzlich ein axialer Reibschluss erzeugt.

Hierzu kann zwischen dem Grund der Halteaufnahme und der Stirnfläche ein Federelement, beispielsweise eine Spiralfeder, angeordnet sein. Diese kann den Haltezapfen aus der Halteaufnahme herauszudrücken suchen, wodurch das Halteelement gegen Wandabschnitte der Teilvolumina sowohl des Haltezapfens als auch der Halteaufnahme gedrückt wird. Hierdurch wird die durch die Axialsicherung hervorgerufene Reibung erhöht.

Das Halteelement kann radialelastisch ausgestaltet und in das Teilvolumen eingepresst sein. Umfasst das Aufnahmevolumen zwei Teilvolumina, die sich in der Arbeitsposition gegenüberliegen, kann sich das radialelastisch verformte Halteelement bei Erreichen der Arbeitsposition zumindest teilweise entspannen und wenigstens abschnittsweise in das gegenüberliegende Teilvolumen springen. Das Halteelement ragt dann in beide Teilvolumina und arretiert den Haltezapfen formschlüssig. Ist das Halteelement auch in der Arbeitsposition radialelastisch vorgespannt, wird der Reibschluss verstärkt.

Zur einfachen Montage des Ringbocks kann es vorteilhaft sein, wenn das Halteelement im Wesentlichen vollständig in das im Haltezapfen oder in der Halteaufnahme vorgesehene Teilvolumen eintauchen kann, während der Haltezapfen in den Befestigungsbock eingesteckt wird. Hierzu hat es sich als nützlich erwiesen, das Halteelement zumindest in radialer Richtung elastisch auszugestalten.

Die Teilvolumina der Haltezapfen und der Halteaufnahme können unterschiedlich und wie im Folgenden beschrieben ausgestaltet sein.

In einer ersten Ausgestaltung kann das wenigstens eine Teilvolumen zumindest abschnittsweise durch beispielsweise nutenförmige Vertiefungen im Haltezapfen und/oder in der Halteaufnahme ausgeformt sein. Die Vertiefungen können zumindest abschnittsweise ringförmig und entlang einer Umfangsrichtung des im Wesentlichen zylindrischen und insbesondere kreiszylindrischen Haltezapfens ausgebildet sein. Sind beide Teilvolumina umlaufend ausgebildet, so vereinen sie sich in einer Ausgestaltung in der Arbeitsposition zu einem durchgängigen, im Wesentlichen ring- oder torusförmigen Aufnahmevolumen.

Vor allem wenn der Haltezapfen in der Arbeitsposition um seine Längsachse drehbar sein soll, kann es vorteilhaft sein, wenn die Vertiefung sich durchgängig um den gesamten Umfang erstreckt. Die Vertiefung kann in und/oder entgegen der Einsteckrichtung weisende Wandabschnitte aufweisen, die zumindest abschnittsweise senkrecht zur Längsachse angeordnet sein können und als Anschlagsflächen dienen.

Gemäß einem weiteren vorteilhaften Aspekt der Erfindung kann verhindert werden, dass das Halteelement beim Überschreiten einer vorgegebenen Axialkraft beschädigt wird. Dies wird dadurch erreicht, dass das Halteelement in eine in einem der Teilvolumina, vorzugsweise in dem jeweils gegenüberliegenden Teilvolumen, angeordnete Ausweichstellung überführbar ist, in der der Haltezapfen am Halteelement vorbei in axialer Richtung verschoben werden kann. In der Ausweichstellung kann das Halteelement elastisch verformt sein und eine elastische Druckkraft auf den Haltezapfen ausüben, um die Axialkraft durch Reibschluss zu verringern.

Damit das Halteelement beschädigungsfrei in die Ausweichstellung bewegt werden kann, können wenigstens einzelne Wandabschnitte der Vertiefungen als sich in axialer Richtung erstreckende, beispielsweise rampen- oder trichterförmige Auflaufschrägen ausgebildet sein. Durch die Axialkraft wird das Halteelement gegen die Auflaufschräge und über diese in die Ausweichstellung gedrückt.

Insbesondere kann der in Einsteckrichtung vordere Wandabschnitt der Vertiefung des Haltezapfens als Auflaufschräge ausgebildet sein. Wird bei dieser Ausgestaltung der Haltezapfen in Einsteckrichtung aus der Arbeitsposition weiter in die Halteaufnahme gedrückt, so schiebt die Auflaufschräge das Halteelement vom Zapfen weg und das Halteelement weicht in die im Teilvolumen des Befestigungsbocks angeordnete Ausweichstellung aus. Ist das entgegen der Einsteckrichtung weisende Wandelement des Teilvolumens der Halteaufnahme rampenförmig ausgebildet, liegt die Ausweichstellung des Halteelements im Teilvolumen des Haltezapfens.

In einer weiteren vorteilhaften Ausgestaltung kann der Haltezapfen wenigstens abschnittsweise einen zahnradförmigen Querschnitt aufweisen, wobei benachbarte Zähne jeweils zumindest Abschnitte eines Teilvolumens begrenzen können. Insbesondere können die Zähne in der Haltenut angeordnet und weniger oder gleich hoch wie die Haltenut sein. In dieses Teilvolumen kann ein elastisch auslenkbarer Teil des Halteelements eingreifen. Insbesondere wenn der Haltezapfen den zahnradförmigen Querschnitt aufweist, kann das im Befestigungsbock vorgesehene Teilvolumen radial zur Halteaufnahme verlaufen. In das radiale Teilvolumen des Befestigungsbocks kann das Halteelement, beispielsweise eine Kugelkopfschraube, eingesetzt werden und in das gegenüberliegende Teilvolumen zwischen den Zähnen eingreifen. Das Halteelement ragt in eines der Teilvolumina und sichert dieses somit form- bzw. kraftschlüssig. Das Halteelement kann beispielsweise in das Teilvolumen des Befestigungsbocks eingeschraubt und/oder mit diesem verklebt sein. Das radial ausgerichtete Teilvolumen des Befestigungsbocks kann selbstverständlich auch mit den anderen beschriebenen oder sonstigen Haltezapfen bzw. Ringlaschen verwendet werden.

Das im Befestigungsbock vorgesehene Teilvolumen kann in einem weiteren Ausgestaltungsbeispiel die Halteaufnahme an ihrem Rand schneiden und rohrförmig ausgeformt sein.

Die Halteelemente können wie im Folgenden beschrieben unterschiedlich ausgebildet und mit wenigstens einem der oben genannten Teilvolumina verwendet werden.

Das Halteelement kann wenigstens abschnittsweise komplementär zum Aufnahmevolumen sein.

Ein ringförmiges Halteelement ist insbesondere für ein in Umlaufrichtung umlaufendes Aufnahmevolumen geeignet und kann beispielsweise als eine verformbare Scheibe oder als ein Sprengring ausgebildet sein und gleichzeitig in das Teilvolumen des Befestigungsbocks und in das Teilvolumen des Haltezapfens ragen. Das Halteelement kann eine kreisförmige oder auch elliptische oder wellenförmige oder gezackte Form aufweisen. Vor allem eine Scheibe mit gezacktem, gewelltem oder elliptischem Rand ist hierfür geeignet. Das Halteelement kann radial- oder axialelastisch vorgespannt im Aufnahmevolumen aufgenommen sein.

Ist insbesondere das Teilvolumen der Halteaufnahme rohrförmig, kann das Halteelement beispielsweise stiftförmig oder als eine zylindrische und entlang ihrer Längsachse geschlitzte Spannhülse ausgebildet sein. Das Halteelement kann in die Halteaufnahme bzw. in das im Haltezapfen vorgesehene Teilvolumen ragen, wenn dieser in seiner Arbeitsposition in der Halteaufnahme angeordnet ist.

Anstelle eines geraden Stiftes kann das Halteelement auch als ein gebogener Drahtabschnitt, beispielsweise als ein federnder Drahtbügel, ausgebildet sein. Die Enden des Drahtabschnittes können ringförmig gebogen und auf am Befestigungsbock vorgesehene, insbesondere starre Befestigungsstifte aufgesetzt oder aufgepresst sein. Ein zwischen den Enden liegender mittlerer Bereich des Drahtabschnittes kann zumindest in einer in axialer Richtung verlaufenden Projektion in die Halteaufnahme ragen und insbesondere in einem Randbereich der Halteaufnahme angeordnet sein. Der Drahtabschnitt kann aus Bandstahl gefertigt sein, um höhere Reibwerte zu erreichen.

Die Befestigungsstifte können gerade, insbesondere parallel zueinander verlaufen und die beiden Befestigungsböcke miteinander verbinden bzw. den Zwischenraum zwischen den Befestigungsböcken überbrücken. Beispielsweise kann wenigstens einer der Befestigungsstifte als ein Distanzstab ausgebildet sein, dessen Länge im Wesentlichen einem Arbeitsabstand zwischen den beiden Befestigungsböcken vorgibt. Ist der Ringbock montiert und sind die Befestigungsböcke in ihrem Arbeitsabstand angeordnet, so befinden sich die Haltezapfen in ihrer Arbeitsposition.

Beispielsweise kann der wenigstens eine Befestigungsstift in in den Befestigungsböcken vorgesehenen Stiftaufnahmen eingesteckt oder mit zumindest einem der Befestigungsböcke form-, kraft- oder stoffschlüssig verbunden sein. Sind die beiden Befestigungsböcke unverschieblich mit dem wenigstens einen Befestigungsstift verbunden, so sind die Befestigungsböcke gegen axiale Relativbewegungen zueinander gesichert: Der wenigstens eine Befestigungsstift legt als Distanzstab den Abstand der Befestigungsböcke zueinander fest und bildet die Axialsicherung aus, durch die der Haltezapfen in der vorbestimmten axialen Arbeitsposition in der Halteaufnahme gesichert ist.

Insbesondere wenn beide Befestigungsstifte als Distanzstäbe ausgebildet sind, kann der Drahtabschnitt insbesondere zwischen den Befestigungsböcken auf den Befestigungsstiftenangeordnet und beispielsweise zumindest in Axialrichtung verschieblich oder auch unverschieblich mit den Befestigungsstiften verbunden sein.

Im montierten Zustand des Ringbocks erzeugt der Drahtabschnitt einen Reibschluss mit der Ringlasche, wodurch ein freies Schwenken der Ringlasche behindert wird. Dieser Reibschluss ist verstärkt, wenn zumindest der mittlere Bereich des Drahtabschnitts im montierten Zustand durch die Ringlasche elastisch verbogen ist.

Um einen vorzeitigen Verschleiß der Halteaufnahme und des Haltezapfens zu verhindern, können Gleitorgane in die Halteaufnahme einführbar bzw. in dieser angeordnet sein.

Auf dem die Halteaufnahme in der jeweiligen Einsteckrichtung begrenzenden Grund kann als Gleitorgan eine Gleitscheibe, zum Beispiel aus Aluminium-Mehrstoffbronze vorgesehen sein. Die Gleitscheibe schützt eine in Einsteckrichtung weisende Stirnfläche eines freien Endes des Haltezapfens und/oder den Grund der Halteaufnahme auch unter Last vor Abrieb, falls der Haltezapfen im Betrieb in die Halteaufnahme gedrückt werden sollte. Die Gleitscheibe kann eine Überlastung des den Reibschluss zwischen dem Halteelement und den Wandabschnitten verstärkenden Federelements verhindern, wenn der Haltezapfen im Betrieb in die Halteaufnahme eingedrückt wird. Zusätzlich oder alternativ können sich auch flüssige Schmiermittel als Gleitorgane in der Halteaufnahme befinden und entsprechende Vorrichtung zum Befüllen, wie Schmiernippel, vorgesehen sein.

Ferner kann in einer vorteilhaften Ausgestaltungsform als Gleitorgan eine in der Halteaufnahme angeordnete und den Haltezapfen wenigstens abschnittsweise aufnehmende Gleitbuchse vorhanden sein. Die Teilvolumina auf Seiten des Befestigungsbocks bzw. der Halteaufnahme sind bei dieser Ausgestaltung entsprechend in der Gleitbuchse anzuordnen. Alternativ kann das Gleitorgan auch als eine Gleithülse ohne Grund ausgeformt sein, die hohlzylindrisch mit einer in ihr Inneres weisenden Vertiefung für das Teilvolumen der Halteaufnahme ausgebildet ist und sich entlang der Längsachse des Haltezapfens erstreckt.

Um bei Verschleiß das Gleitorgan bei am Gut befestigten Ringbock tauschen zu können, kann der Befestigungsbock eine Wartungsöffnung mit einem Durchmesser aufweisen, der wenigstens dem Durchmesser des Gleitorgans oder der Halteaufnahme entspricht. Allerdings ist es dann notwendig, dass ein Verschlusselement die in Einsteckrichtung wirkenden Kräfte aufnimmt und in den Befestigungsbock leitet. Dieses ist entsprechend am Befestigungsbock zu befestigen. Alternativ kann das Gleitorgan, also die Gleithülse, -buchse oder scheibe am Verschlusselement angebracht und mit diesem zusammen entfernbar ausgestaltet sein.

Auch die Ausgestaltung der Befestigungsböcke kann zur Verbesserung der Sicherheit von Anschlag-, Hebe- oder Zurrvorgängen sowie zur Vereinfachung der Montage des Ringbocks beitragen.

Die Befestigungsböcke können mit Befestigungsbereichen ausgebildet sein, über welche sie am Gut fixiert werden können. Beispielsweise können die Befestigungsbereiche so ausgestaltet sein, dass die Befestigungsböcke mit dem Gut verschraubbar sind. Oftmals sind die auf den Ringbock wirkenden Belastungen jedoch so hoch, dass dieser stoffschlüssig mit dem Gut zu verbinden ist. Um eine möglichst feste Verbindung zwischen dem Gut und dem Ringbock zu erhalten, können die Befestigungsbereiche als Schweißbereiche ausgebildet sein.

Um zu vermeiden, dass Wasser zwischen Befestigungsbock und Gut eindringen und zu Korrosion führen kann, können die Befestigungsbereiche um den Befestigungsbock umlaufen und die Befestigungsböcke durchgängig in den umlaufenden Befestigungsbereichen mit dem Gut verschweißt sein.

Um ein Verschweißen auch im Bereich der Halteaufnahmen zu ermöglichen, hat es sich als vorteilhaft erwiesen, wenn die Halteaufnahmen in einem Mindestabstand zu den Befestigungsbereichen ausgebildet sind, der in etwa eineinhalb bis etwa dreimal, vorzugsweise zweimal so groß ist, wie die entstehende Schweißnaht. Sind die Schweißwerkzeuge klein genug, kann der Abstand auch kleiner sein. Sollten die Schweißwerkzeuge, beispielsweise Schweißelektroden, es erfordern, kann der Abstand auch größer sein.

Der Abstand der Halteaufnahmen zum Gut und die dadurch entstehende Lücke zwischen der Ringlasche und dem Gut ermöglicht auch, dass die Oberfläche des Gutes unterhalb der Ringlasche bearbeitet werden kann. Zum Beispiel kann die Schweißnaht, ein Maschinenteil oder ein Container somit auch unterhalb der Ringlasche lackiert werden.

Ferner ist für die Sicherheit der Güter beim Anschlagen, Heben und/oder Zurren von Gütern von Belang, dass der Ringbock bzw. die Ringlasche unter bevorzugten Winkeln belastet werden. Damit der Benutzer des Ringbocks prüfen kann, ob dieser unter den vorgegebenen Winkeln belastet ist, kann die Ringlasche und/oder wenigstens einer der Befestigungsböcke Winkelmarkierungen aufweisen, die entlang der bevorzugten Belastungsrichtungen angeordnet sind. Die Winkelmarkierungen können beispielsweise eingeschlagen oder beim Herstellvorgang der Ringlasche und der Befestigungsböcke in diese eingeformt sein.

Im Folgenden ist die Erfindung beispielhaft anhand von Ausführungsbeispielen mit Bezug auf die Zeichnungen erläutert. Die unterschiedlichen Merkmale der Ausführungsformen können dabei unabhängig voneinander kombiniert werden, wie es bei den einzelnen vorteilhaften Ausgestaltungen bereits dargelegt wurde. Es zeigen:
- Fig. 1 bis 5: eine schematische Darstellung eines ersten Ausführungsbeispiels einer erfindungsgemäßen Vorrichtung zum Anschlagen, Heben und/oder Zurren von Gütern mit einem Ringbock;
- Fig. 6: eine schematische Darstellung eines weiteren Ausführungsbeispiels der Erfindung entlang der Ebene B-B der Figur 3;
- Fig. 7: eine schematische Darstellung eines weiteren Ausführungsbeispiels der erfindungsgemäßen Vorrichtung entlang der Ebene A-A der Figur 1;
- Fig. 8: eine schematische Darstellung einer Variante des Ausführungsbeispiels der Fig. 7 in einer Vorderansicht;
- Fig. 9, 10: eine schematische Darstellung eines weiteren Ausführungsbeispiels des erfindungsgemäßen Befestigungsbocks entlang der Ebene C-C der Figur 2;
- Fig. 11, 12: eine schematische Darstellung eines weiteren Ausführungsbeispiels der Erfindung entlang der Ebene C-C der Fig. 2 und D-D der Figur 3;
- Fig. 13, 14: eine schematische Darstellung eines weiteren Ausführungsbeispiels der Erfindung entlang der Ebene C-C der Fig. 2 und D-D der Figur 3;
- Fig. 15: eine schematische Darstellung eines Details eines weiteren Ausführungsbeispiels der Erfindung im Schnitt entlang der Ebene C-C der Figur 2;
- Fig. 16: eine schematische Darstellung eines weiteren Ausführungsbeispiels der Erfindung im Schnitt entlang der Ebene C-C der Figur 2;
- Fig. 17: eine schematische Darstellung eines weiteren Ausführungsbeispiels der Erfindung im Schnitt entlang der Ebene D-D der Figur 3;
- Fig. 18, 19: eine schematische Darstellung eines weiteren Ausführungsbeispiels der Erfindung im Schnitt entlang der Ebene C-C der Figur 2 bzw. in einer Seitenansicht;
- Fig. 20: eine schematische Darstellung eines weiteren Ausführungsbeispiels der Erfindung im Schnitt entlang der Ebene C-C der Figur 2;
- Fig. 21, 22: eine schematische Darstellung eines weiteren Ausführungsbeispiels der Erfindung.

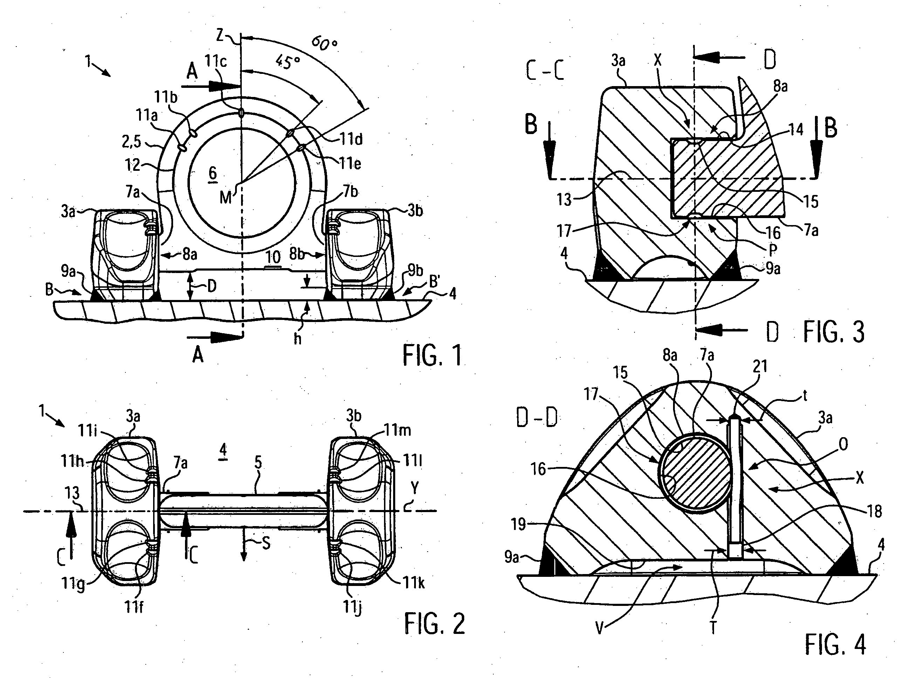

Die Schnittebenen A-A, B-B, C-C und D-D des Ausführungsbeispiels der Figur 1 bis 3 dienen, wie aus der obigen Figurenbeschreibung hervorgeht, auch zur Erläuterung der anderen Ausführungsbeispiele.

Zunächst sind Aufbau und Funktion einer erfindungsgemäßen Vorrichtung zum Anschlagen, Heben und/oder Zurren von Gütern, mit Bezug auf das Ausführungsbeispiel der Figuren 1 bis 5 beschrieben.

Figur 1 zeigt einen Ringbock 1 mit einer Ringlasche 2 und zwei Befestigungsböcken 3a, 3b. Der Ringbock 1 ist über die Befestigungsböcke 3a, 3b an einem Gut 4, beispielsweise an der Außenwand eines Containers, befestigt.

Ein in der Zeichenebene angeordneter Tragring 5 der Ringlasche 2 umschließt eine im Wesentlichen kreisförmige Anbringöffnung 6, in die ein Anschlagsmittel eingreifen kann. Auf der zum Gut 4 weisenden Seite des Tragrings 5 schließen sich zwei Haltezapfen 7a, 7b an den Tragring 5 an, die im Wesentlichen parallel zum Gut 4 verlaufen und miteinander fluchtend voneinander weg weisen. Die Haltezapfen 7a, 7b sind in Halteaufnahmen 8a, 8b der Befestigungsböcke 3a, 3b eingesetzt und in diesen durch die nachstehend mit Bezug auf die Figuren 3 bis 5 beschriebene Axialsicherung X arretiert. Die über die Haltezapfen 7a, 7b mit dem Tragring 5 verbundenen Befestigungsböcke 3a, 3b sind bevorzugt über Schweißnähte 9a, 9b am Gut 4 befestigt, die um den jeweiligen Befestigungsbock 3a, 3b umlaufen.

Der Ringbock 1 kann als Einheit vormontiert mit dem Gut 4 verbunden werden und beispielsweise, bevor die Befestigungsböcke 3a, 3b mit dem Gut 4 verschweißt werden, aus Einzelteilen eines Bausatzes zusammengesetzt werden.

Der Ringbock 1 ist im Wesentlichen spiegelsymmetrisch zu einer senkrecht zum Gut 4 und zur Ringlasche 2 ausgerichteten Symmetrieebene Z aufgebaut, entlang der die Schnittebene A-A Symmetrieebene Z verläuft.

Zwischen den Haltezapfen 7a, 7b weist die Ringlasche 2 einen im Wesentlichen gerade ausgebildeten Haltebalken 10 auf, aus dem der Tragring 5 und die Haltezapfen 7a, 7b entspringen. Der Haltebalken 10 ist insbesondere im Bereich der Haltezapfen 7a, 7b durch die Befestigungsböcke 3a, 3b in einem Abstand D zum Gut 4 angeordnet.

Befestigungsbereiche B, B' der Befestigungsböcke 3a, 3b sind über die um die Befestigungsböcke 3a, 3b jeweils umlaufenden Schweißnähte 9a, 9b am Gut 4 befestigt. Die parallel zum Abstand D gemessene Höhe h der Schweißnähte 9a, 9b ist in etwa halb so groß wie der Abstand D, der auch mehr als 2-fach größer sein kann als die Höhe h. Auch kann der Abstand D kleiner der doppelten Höhe h der Schweißnähte 9a, 9b sein, so lange die Schweißnähte 9a, 9b auch zwischen dem Haltebalken 10 und dem Gut 4 ausgebildet werden können.

An der Ringlasche 2 sind eine oder mehrere Winkelmarkierungen 11a bis 11e vorgesehen, die in Bezug auf die Symmetrieebene Z und einen Mittelpunkt M der Anbringöffnung 6 unter vorgegebenen Winkeln von 0°, 45° und 60° angeordnet sind. Dabei befinden sich die Winkelmarkierungen 11a bis 11e auf einer in der Figur 1 angedeuteten und mit dem Bezugszeichen 12 markierten und im Wesentlichen kreisförmigen Ringhilfslinie, deren Mittelpunkt in etwa mit dem Mittelpunkt M der Anbringöffnung 6 übereinstimmt und die im Wesentlichen mittig auf der Ringlasche 2 dargestellt ist. Die Winkelmarkierungen 11a bis 11e sind beidseits der Symmetrieebene Z ausgebildet und können beispielsweise eingestanzt sein.

Figur 2 zeigt das Ausführungsbeispiel der Figur 1, wobei für Elemente, die in Funktion und/oder Aufbau den Elementen des Ausführungsbeispiels der Figur 1 entsprechen, dieselben Bezugszeichen verwendet werden und der Ringbock 1 schematisch in einer Aufsicht auf das Gut 4 gezeigt ist.

Entlang einer den Tragring 5 im Wesentlichen in zwei gleiche kreisförmige Hälften teilenden Symmetrieebene Y verläuft die Schnittebene C-C durch den Befestigungsbock 3a und den Haltezapfen 7a.

Die Ringlasche 2 ist über die Haltezapfen 7a, 7b und die Halteaufnahmen 8a, 8b schwenkbar mit den Befestigungsböcken 3a, 3b verbunden. Wird die Ringlasche 2 beispielsweise in oder entgegen einer Richtung S geschwenkt, so rotieren die miteinander fluchtenden Haltezapfen 7a, 7b in den Halteaufnahmen 8a, 8b um ihre in der Symmetrieebene Y angeordnete Längsachse 13, die im Wesentlichen mit der Längsachse der Halteaufnahmen 8a, 8b zusammenfällt.

Die Befestigungsböcke 3a, 3b können an ihren von den Befestigungsbereichen B, B' beabstandet angeordneten Abschnitten ebenfalls mit einer oder mehreren Winkelmarkierungen 11f bis 11m versehen sein. Die Winkelmarkierungen 11f bis 11m sind auch dann gut sichtbar in einem vom Gut 4 weg weisenden Bereich des Ringbocks 1 angeordnet, wenn dieser am Gut 4 befestigt ist. Die Winkelmarkierungen 11f bis 11m zeigen Schwenkpositionen, beispielsweise 45° oder 60°, der Ringlasche 2 in Bezug auf die hier dargestellte Befestigungs- oder Mittenstellung, in der die Ringlasche 2 im Wesentlichen senkrecht zum Gut 4 ausgerichtet oder in der Symmetrieebene Y angeordnet ist, an. Selbstverständlich können die Winkelmarkierungen 11f bis 11m auch an anderen Winkelpositionen angeordnet sein.

In der Figur 3 ist der Ringbock 1 entlang der in der Figur 2 gezeigten Ebene C-C geschnitten gezeigt, wobei der Befestigungsbock 3a und der Haltezapfen 7a vergrößert dargestellt sind.

Der Haltezapfen 7a ist fast vollständig in die Halteaufnahme 8a eingesetzt. In dieser Schnittdarstellung ist erkennbar, dass der im Wesentlichen kreiszylindrisch ausgebildete Haltezapfen 7a an seiner im Wesentlichen parallel zu seiner Längsachse 13 verlaufenden Mantelfläche 14 mit einer Vertiefung 15 ausgeformt ist, die um die Längsachse 13 des Haltezapfens 7a an dessen Mantelfläche 14 umlaufend ausgebildet sein kann. Die umlaufende Vertiefung 15 kann unabhängig von der Schwenkposition der Ringlasche 2 einer ausgewählten Stelle einer Innenfläche 16 der Halteaufnahme 8a gegenüberliegen. Die Vertiefung 15 begrenzt ein freies Teilvolumen 17 eines zu der Axialsicherung X gehörenden Aufnahmevolumens A.

Die Figur 4 zeigt schematisch einen Befestigungsbock 3a in einer entlang der Ebene D-D der Figur 3 angedeuteten Schnittdarstellung. Der Haltezapfen 7a erstreckt sich senkrecht zur Zeichenebene und ist im Wesentlichen auf der Höhe seiner Vertiefung 15 geschnitten gezeigt. Das Teilvolumen 17 ist zwischen der Innenfläche 16 der Halteaufnahme 8a und der Vertiefung 15 des Haltezapfens 7a als ein ringförmiger Spalt gezeigt. Der Durchmesser des Haltezapfens 7a ist im Vergleich zu anderen Positionen entlang seiner Längsachse 13 durch die Vertiefung 15 verringert.

Im Befestigungsbock 3a ist eine senkrecht zum Gut 4 verlaufende und die Halteaufnahme 8a an ihrem Rand abschnittsweise schneidende hohlzylindrische Öffnung 18 vorgesehen. Die Öffnung 18 mündet in einer zum Gut 4 weisenden und von dieser beabstandet angeordneten Unterseite 19 des Befestigungsbocks 3a. Wegen der umlaufenden Schweißnaht 9a grenzt die Unterseite 19 an ein hermetisch abgeschlossenes freies Volumen V zwischen dem Gut 4 und dem Befestigungsbock 3a an.

Die Öffnung 18 enthält ein weiteres Teilvolumen 20 des Aufnahmevolumens A der Axialsicherung X. Die Axialsicherung X umfasst ferner ein Halteelement 21, das in diesem Ausführungsbeispiel stiftförmig ausgebildet und vollständig in die Öffnung 18 eingesetzt gezeigt ist. Das Halteelement 21 ragt dabei auch in das durch die Vertiefung 15 des Haltezapfens 7a begrenzte Teilvolumen 17 und liegt abschnittsweise an der Vertiefung 15 bzw. dem Haltezapfen 7a an. Der parallel zum Gut 4 gemessene Durchmesser T der Öffnung 18 ist wenigstens in einem Schnittbereich O, in dem sich die Teilvolumina 17, 20 zumindest teilweise überlappen, größer als der Durchmesser t des stiftförmigen Halteelements 21.

Das stiftförmige Halteelement 21 ist im Schnittbereich O durch den Haltezapfen 7a elastisch verformt gezeigt und übt eine quer zur Längsachse 13 des Haltezapfens 7a verlaufende Rückstellkraft auf den Haltezapfen 7a aus.

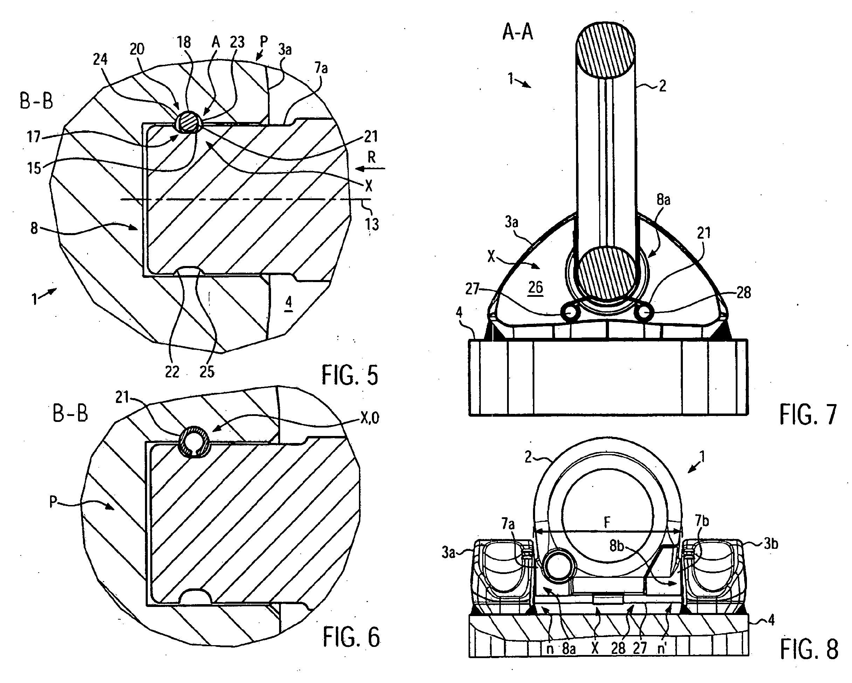

Die in der Figur 5 gezeigte schematische Schnittdarstellung des Befestigungsbocks 3a und des Haltezapfens 7a entspricht einer geschnittenen Aufsicht auf den Ringbock 1 bzw. das Gut 4.

Im Bereich O, in dem sich die Teilvolumina 17, 20 zum Aufnahmevolumen A vereinigen, ist das stiftförmige Halteelement 21 angeordnet, das beispielsweise als ein Federstahldraht ausgeformt sein kann. Das Halteelement 21 liegt in der Vertiefung 15 am Haltezapfen 7a und in der Öffnung 18 am Befestigungsbock 3b an. Wird nun versucht, den Haltezapfen 7a entgegen einer parallel zu seiner Längsachse 13 und in die Halteaufnahme 8a weisenden Einsteckrichtung R aus seiner hier gezeigten Arbeitsposition P zu verschieben, so stößt das Halteelement 21 an entgegen bzw. in der Einsteckrichtung R weisende Wandabschnitte 22, 23 der Vertiefung 15 bzw. der Öffnung 18 an. Das Halteelement 21 verhindert also eine Entnahme des Haltezapfens 7a aus der Halteaufnahme 8a. Wird der Haltezapfen 7a weiter in die Halteaufnahme 8a eingeschoben, so liegt das Halteelement 21 an entgegen oder in Einsteckrichtung R weisenden Wandabschnitten 24, 25 der Öffnung 18 bzw. der Vertiefung 15 an.

Figur 6 zeigt ein weiteres Ausführungsbeispiel der Erfindung, wobei für Elemente, die in Funktion und/oder Aufbau den Elementen der Ausführungsbeispiele der bisherigen Figur 5 entsprechen, dieselben Bezugszeichen verwendet werden. Der Kürze halber wird lediglich auf die Unterschiede zu den Ausführungsbeispielen der bisherigen Figuren eingegangen.

Figur 6 zeigt eine Variante des Halteelements 21, das hier nicht als ein Federstahldraht, sondern als eine entlang ihrer aus der Zeichenebene heraus weisenden Längsrichtung geschlitzte hohlzylindrische Spannhülse mit elastisch verformbaren Querschlitz ausgeformt ist, die aus Federstahl gefertigt sein kann.

Figur 7 zeigt ein weiteres Ausführungsbeispiel der erfindungsgemäßen Vorrichtung, wobei für Elemente, die in Funktion und/oder Aufbau den Elementen der Ausführungsbeispiele der Figuren 1 bis 6 entsprechen, dieselben Bezugszeichen verwendet werden. Der Kürze halber wird lediglich auf die Unterschiede zu den Ausführungsbeispielen der bisherigen Figuren eingegangen.

Der Ringbock 1 ist entlang der Ebene A-A der Figur 1 geschnitten dargestellt. Das Halteelement 21 ist hier als ein Drahtabschnitt, insbesondere aus Flachstahldraht, ausgeformt, der beispielsweise vorgeformter Federstahl sein kann. Der Drahtabschnitt ist formschlüssig an in einer Stirnseite 26 des Befestigungsbocks 3a vorgesehenen Halterungen befestigt Die Enden des Drahtabschnitts sind zu Schlaufen umgebogen, die auf Halterungen in Form von Befestigungsstiften 27, 28 aufgesteckt bzw. aufgepresst sind. Zwischen den Enden des Drahtabschnitts kann dieser als ein elastisch verformbarer Bogen ausgebildet sein, der vor der Halteaufnahme 8a angeordnet sein oder in diese ragen kann.

Die Befestigungsstifte 27, 28 sind hier in einem gleichen Abstand vom Gut 4 angeordnet dargestellt. Wenigstens einer der Befestigungsstifte 27, 28 kann jedoch auch einen größeren oder kleineren Abstand zum Gut 4 aufweisen und so ausgestaltet sein, dass der Drahtabschnitt oder der Befestigungsstift 27, 28 ein Schwenken der Ringlasche 2 über einen bestimmten Winkel hinaus begrenzt und somit eine maximale Schwenklage der Ringlasche 2 definiert.

Wie in den bisherigen und kommenden Ausführungsbeispielen kann es ausreichen, wenn das Halteelement 21 reibschlüssig mit dem Haltezapfen 7a und/oder der Halteaufnahme 8a verbunden ist und somit die Bewegung des Haltezapfens 7a in der Halteaufnahme 8a entlang seiner Längsachse zumindest erschwert. Der Drahtabschnitt kann jedoch alternativ auch hier in die Vertiefung 15 des Haltezapfens 7a ragen, falls diese zum Beispiel weiter zu der Mitte des Haltebalkens 10 verschoben ist. Der Haltezapfen kann so auch formschlüssig mit dem Drahtabschnitt verbunden sein. Hierdurch ist der Haltezapfen 7a gegen Bewegungen zumindest entgegen der in die Zeichenebene weisenden Einsteckrichtung R gesichert. Die Vertiefung kann in einem außerhalb der Halteaufnahme 8a angeordneten Teil des Haltezapfens 7a vorgesehen sein.

Das Halteelement 21 kann in allen Ausführungsbeispielen auch ein ungewolltes Schwenken oder Verkippen der Ringlasche 2 verhindern. Insbesondere ein durch das Eigengewicht der Ringlasche 2 hervorgerufenes Kippen kann verhindert werden, so dass die Ringlasche 2 nicht selbsttätig ihre Lage ändert und gegen das Gut 4 schlägt. Durch das Auftreffen der Ringlasche 2 auf das Gut 4 erzeugter Lärm wird verhindert.

Fig. 8 zeigt ein weiteres Ausführungsbeispiel der erfindungsgemäßen Vorrichtung, wobei für Elemente, die in Funktion und/oder Aufbau den Elementen der Ausführungsbeispiele der Fig. 1 bis 7 entsprechen, dieselben Bezugszeichen verwendet werden. Der Kürze halber wird lediglich auf die Unterschiede zu den Ausführungsbeispielen der bisherigen Figuren eingegangen.

Fig. 8 zeigt eine Variante des Ringbocks 1, bei dem die Befestigungsstifte 27, 28 zwischen dem Gut 4 und der Ringlasche 2 die beiden Befestigungsböcke 3a, 3b miteinander verbindend angeordnet sind. Die Ringböcke 3a, 3b sind in ihrem Arbeitsabstand F voneinander beabstandet am Gut 4 befestigt, wobei der Arbeitsabstand F durch die Befestigungsstifte 27, 28 nach unten begrenzt ist - die Befestigungsstifte 27, 28 erfüllen die Funktion von Distanzstäben.

Die Befestigungsstifte 27, 28 ragen in in den Befestigungsböcken vorgesehene Stiftaufnahmen n, n'. Die Stiftaufnahmen n, n' können beispielsweise als in den Befestigungsböcken 3a, 3b vorgesehene Sacklöcher ausgestaltet sein, deren offene Enden im montierten Zustand des Ringbocks 1 zum jeweils anderen Befestigungsbock 3a, 3b weisen. Die Befestigungsstifte 27, 28 können form-, kraft- oder stoffschlüssig und insbesondere unverschieblich mit wenigstens einem der Befestigungsböcke 3a, 3b verbunden sein, so dass die Befestigungsstifte 27, 28 den Arbeitsabstand F nicht nur nach unten beschränken, sondern absolut festlegen. Sind die Befestigungsstifte 27, 28 mit beiden Befestigungsböcken 3a, 3b unverschieblich verbunden, so legen sie den Arbeitsabstand F und folglich auch die Arbeitsposition der Haltezapfen 7a, 8a in den Halteaufnahmen 8a, 8b fest. Die Befestigungsstifte 27, 28 bilden, insbesondere zusammen mit den Stiftaufnahmen n, n', die Axialsicherung X.

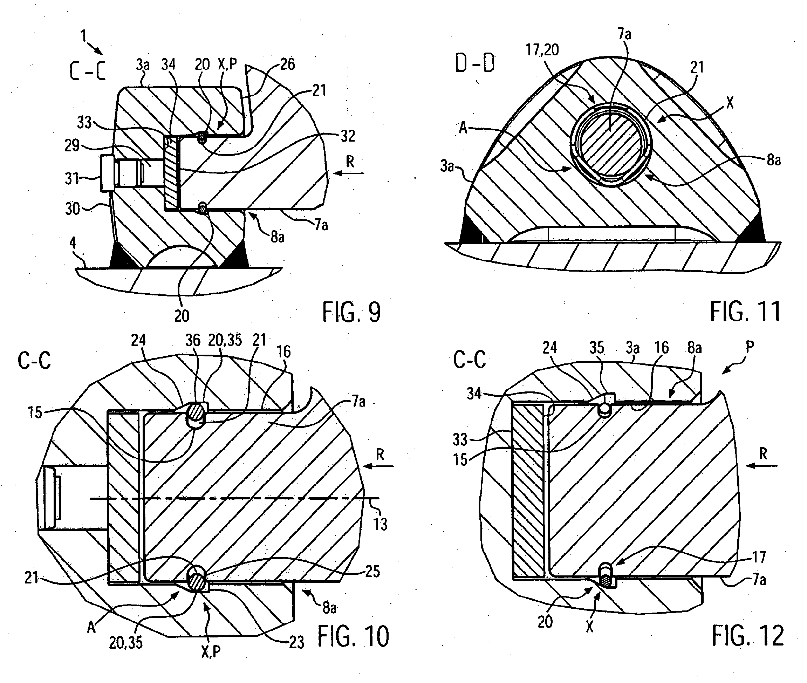

Figuren 9 und 10 zeigen ein weiteres Ausführungsbeispiel der erfindungsgemäßen Vorrichtung, wobei für Elemente, die in Funktion und/oder Aufbau den Elementen der Ausführungsbeispiele der Figuren 1 bis 8 entsprechen, dieselben Bezugszeichen verwendet werden. Der Kürze halber wird lediglich auf die Unterschiede zu den Ausführungsbeispielen der bisherigen Figuren eingegangen.

Die Halteaufnahme 8a endet in diesem Ausführungsbeispiel nicht im Befestigungsbock 3a. Vielmehr setzt sie sich in einer Wartungsöffnung 29 fort. Die Wartungsöffnung 29 verbindet die Halteaufnahme 8a mit einer der Stirnseite 26 gegenüberliegenden Außenseite 30 des Befestigungsbocks 3a. Über die Wartungsöffnung 29 kann beispielsweise bei Bedarf ein Schmiermittel in den Befestigungsbock 3a eingeführt werden, mit Hilfe dessen der Haltezapfen 7a vor allem unter Last besonders gleichmäßig und geräuscharm in der Halteaufnahme 8a rotieren kann. Die Wartungsöffnung 29 ist verschließbar ausgebildet und weist im hier gezeigten Ausführungsbeispiel eine in die Wartungsöffnung 29 eingeschraubte Verschlussschraube 31 auf. Der nicht durch die Verschlussschraube 31 beanspruchte Raum in der Wartungsöffnung 29 steht als ein Reservevolumen für das womöglich flüssige Schmiermittel zur Verfügung.

Zwischen einem in Einsteckrichtung R weisenden freien Ende 32 des Haltezapfens 7a und einem durch die Wartungsöffnung 29 durchbrochenen Grund 33 der Halteaufnahme 8a ist ein Gleitorgan in Form einer Gleitscheibe 34 angeordnet. Wirkt im Betrieb des Ringbocks 1 eine in Einsteckrichtung R weisende Kraft auf die Ringlasche 2, so kann der Haltezapfen 7a weiter in die Halteaufnahme 8a bewegt werden, bis er auf die Gleitscheibe 34 trifft. Die Gleitscheibe 34 gibt eine maximale Einsteckposition des Haltezapfens 7a in der Halteaufnahme 8a vor und ermöglicht als Festschmiermittel ein sanftes, auch unter Last ruckfreies und geräuscharmes Rotieren des Haltezapfens 7a, der wenigstens unter Last an der Gleitscheibe 34 anliegend über diese gleitet. Die Gleitscheibe 34 kann beispielsweise aus Aluminiumbronze, Aluminium-Mehrstoffbronze oder aus einem anderen mechanisch belastbaren Schmierstoff gefertigt sein.

Figur 10 zeigt das Ausführungsbeispiel der Figur 9 in einer vergrößerten Darstellung, wobei für Elemente, die in Funktion und/oder Aufbau den Elementen des Ausführungsbeispiels der Figur 9 entsprechen, dieselben Bezugszeichen verwendet werden.

Das von der Halteaufnahme 8a ausgebildete Teilvolumen 20 weist auch hier in Rastrichtung R weisende und senkrecht zur Rastrichtung R verlaufende Wandabschnitte 25 auf, wobei das Teilvolumen 20 durch einen eine umlaufende Halterinne 35 ausbildenden Rücksprung in der Innenfläche 16 der Halteaufnahme 8a begrenzt ist. Der Durchmesser der Halteaufnahme 8a ist im Bereich des Teilvolumens vergrößert.

Die entgegen der Befestigungsrichtung R weisenden Wandabschnitte 24 der in die Innenfläche 16 eingelassenen Halterinne 35 sind als rampenförmige Auflaufschrängen ausgeformt und verbinden den Boden 36 der Halterinne 35 stetig mit der Innenfläche 16 der Halteaufnahme 8a.

Wirkt nun eine in Einsteckrichtung R wirkende Kraft auf die Ringlasche 2 und wird diese hierdurch weiter in Einsteckrichtung R in die Halteaufnahme 8a eingeschoben, so wird das Halteelement 21 durch die rampenförmigen Auflaufschräge 24 in eine in der Vertiefung 15 liegende Ausweichstellung überführt. Der Querschnitt der Vertiefung 15 entspricht wenigstens dem des Halteelements 21, so dass dieses im Wesentlichen vollständig in die Vertiefung 15 eintauchen kann.

Alternativ kann auch der in Einsteckrichtung R weisende Wandabschnitt 25 der Vertiefung 15 rampenförmig als Auflaufschräge ausgebildet sein, so dass das Halteelement 21 in die nun in der Halterinne 35 vorgesehene Sicherungsstellung gedrückt werden kann.

Figuren 11 und 12 zeigen ein weiteres Ausführungsbeispiel der Erfindung, wobei für Elemente, die in Funktion und/oder Aufbau den Elementen der Ausführungsbeispiele der Figuren 1 bis 10 entsprechen, dieselben Bezugszeichen verwendet werden. Der Kürze halber wird lediglich auf die Unterschiede zu den Ausführungsbeispielen der Figuren 1 bis 10 eingegangen.

Der Befestigungsbock 3a ist entlang der in der Figur 3 gezeigten Ebene D-D geschnitten dargestellt. Der Haltezapfen 7a ist in der Halteaufnahme 8a in seiner Arbeitsposition P angeordnet. Das Aufnahmevolumen A ist ring- bzw. torusförmig aus den Teilvolumina 17, 20 zusammengesetzt. Das Halteelement 21 ist als ein abschnittsweise gerader ausgeformter Haltering ausgestaltet, der in die beiden Teilvolumina 17, 20 ragt. Das Halteelement 21 ist wenigstens abschnittsweise und insbesondere in den gerade ausgeformten Abschnitt elastisch verformt und übt eine Rückstellkraft auf den Haltezapfen 7a und die Halteaufnahme 8a aus, die durch das Halteelement 21 radial und axial gehalten bzw. verklemmt sind.

Figur 12 zeigt das Ausführungsbeispiel der Figur 10, wobei für Elemente, die in Funktion und/oder Aufbau den Elementen des Ausführungsbeispiels der Figur 11 entsprechen, dieselben Bezugszeichen verwendet werden.

Der Befestigungsbock 3a und der Haltezapfen 7a sind in einer vergrößerten und entlang der in der Figur 2 gezeigten Ebene C-C geschnittenen Ansicht schematisch dargestellt. Am Grund 33 der Halteaufnahme 8a ist die Gleitscheibe 34 angeordnet. Der Grund 33 ist nicht durch eine Wartungsöffnung 29 durchbrochen. Die umlaufende und in der Innenfläche 16 der Halteaufnahme 8a vorgesehene Halterinne 35 ist auch hier mit einem rampenförmigen Wandabschnitt 24 ausgestaltet, durch welchen die um die Längsachse der Halteaufnahme 8a rotationssymmetrische Halterinne 35 einen trichterförmigen Querschnitt erhält.

Es ist gut erkennbar, dass das ringförmige Halteelement 21 abschnittsweise in die Vertiefung 15 des Haltezapfens 7a und in den als Halterinne 35 ausgestalteten Rücksprung eingreift. Dabei kann der Durchmesser der Halteaufnahme 8a alternativ durch den Rücksprung in Einsteckrichtung R sprunghaft vergrößert sein und bis zum Grund 33 vergrößert bleiben. Die Halterinne 35 kann sich also bis zum Grund 33 erstrecken, wobei der Haltezapfen 7a durch die Axialsicherung X weiterhin gegen ein ungewolltes Entnehmen aus der Halteaufnahme 8a gesichert ist.

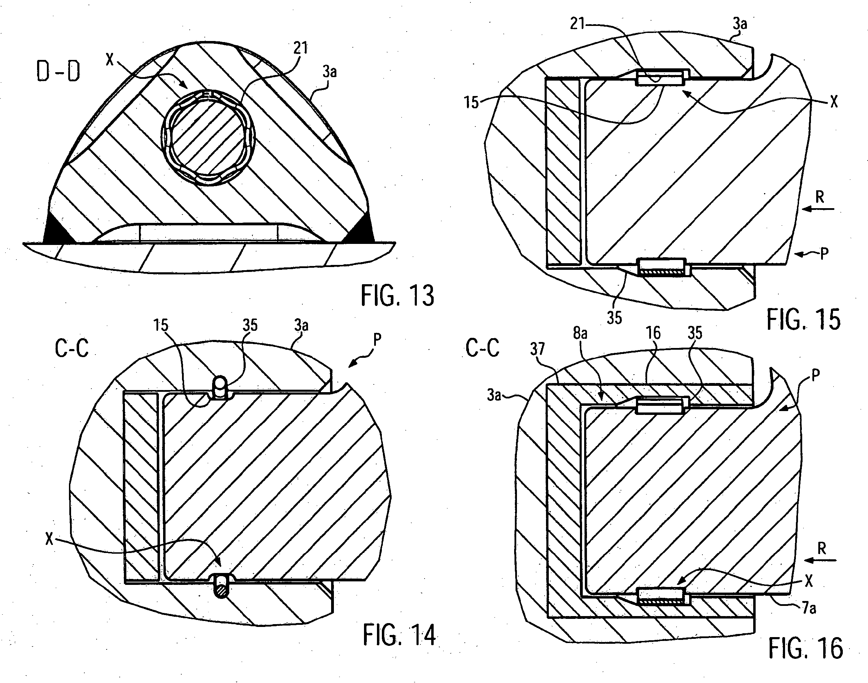

Figuren 13 und 14 zeigen ein weiteres Ausführungsbeispiel, wobei für Elemente, die in Funktion und/oder Aufbau den Elementen der Ausführungsbeispiele der Figuren 1 bis 12 entsprechen, dieselben Bezugszeichen verwendet werden. Der Kürze halber wird lediglich auf die Unterschiede zu den Ausführungsbeispielen der bisherigen Figuren eingegangen.

Die Figuren 13 und 14 zeigen den Befestigungsbock 3a entlang der in der Figur 2 gezeigten Ebene C-C und der in der Figur 3 gezeigten Ebene D-D geschnittenen schematischen Ansichten. Das Halteelement 21 ist als ein im Wesentlichen sternförmiger Haltering gezeigt, dessen wellenförmige Rück- und Vorsprünge abwechselnd in die Vertiefung 15 und die Halterinne 35 ragen. Das einem sinusförmig in radialer Richtung bzw. gestreckt epizykloidisch verformten Ring gleichende Halteelement 21 ist elastisch verformbar und weist insbesondere einen änderbaren Durchmesser auf. Beispielsweise kann das Halteelement 21 als ein Sprengring oder eine elastisch verformbare und im Wesentlichen torusförmige glatte Scheibe ausgebildet sein.

Das Halteelement 21 ist wenigstens abschnittsweise elastisch verformt und übt eine Rückstellkraft auf den Haltezapfen 7a und die Halteaufnahme 8a aus, die durch das Halteelement 21 radial und axial gehalten bzw. verklemmt sind.

Figur 15 zeigt ein weiteres Ausführungsbeispiel der erfindungsgemäßen Vorrichtung, wobei für Elemente, die in Funktion und/oder Aufbau den Elementen der Ausführungsbeispiele der bisherigen Figuren entsprechen, dieselben Bezugszeichen verwendet werden. Der Kürze halber wird lediglich auf die Unterschiede zu den Ausführungsbeispielen der Figuren 1 bis 14 eingegangen.

In der Figur 15 ist der Befestigungsbock 3a in einer Schnittansicht entlang der Ebene C-C dargstellt. Das Halteelement 21 weist den stern- und ringförmigen Querschnitt des in den Figuren 12 und 13 dargestellten Halteelements 21 auf. Jedoch ist das Halteelement hier nicht torus- sondern hohlzylinderförmig ausgebildet. Insbesondere verläuft eine Längsachse des hier dargestellten Halteelements 21 parallel zur Einsteckrichtung R, so dass sich das Halteelement 21 in der Einsteckrichtung R und um seine Längsachse erstreckt. Das Halteelement dieses Ausführungsbeispiels kann ebenfalls aus Flachstahldraht gefertigt sein. In Einsteckrichtung R sind die Vertiefung 15 und die Halterinne 35 der Form des Halteelements 21 angepasst und insbesondere wenigstens abschnittsweise komplementär zu diesem ausgeformt.

Das Halteelement 21 ist wenigstens abschnittsweise elastisch verformt und übt eine im Vergleich zum Ausführungsbeispiel der Figur 13 verstärkte Rückstellkraft auf den Haltezapfen 7a und die Halteaufnahme 8a aus, die durch das Halteelement 21 radial und axial gehalten bzw. verklemmt sind.

Figur 16 zeigt ein weiteres Ausführungsbeispiel der erfindungsgemäßen Vorrichtung, wobei für Elemente, die in Funktion und/oder Aufbau den Elementen der Ausführungsbeispiele der Figuren 1 bis 15 entsprechen, dieselben Bezugszeichen verwendet werden. Der Kürze halber wird lediglich auf die Unterschiede zu den Ausführungsbeispielen der bisherigen Figuren eingegangen.

Anhand der schematisch dargestellten Schnittansicht ist ersichtlich, dass sich die Ränder des Gleitorgans entgegen der Einsteckrichtung R und entlang der Innenflächen 16 der Halteaufnahme 8a erstrecken. Die so gebildete Gleitbuchse 37 umfasst die Halterinne 35, ist fest mit dem Befestigungsbock 3a verbunden und auf den Haltezapfen 7a aufgesteckt dargestellt.

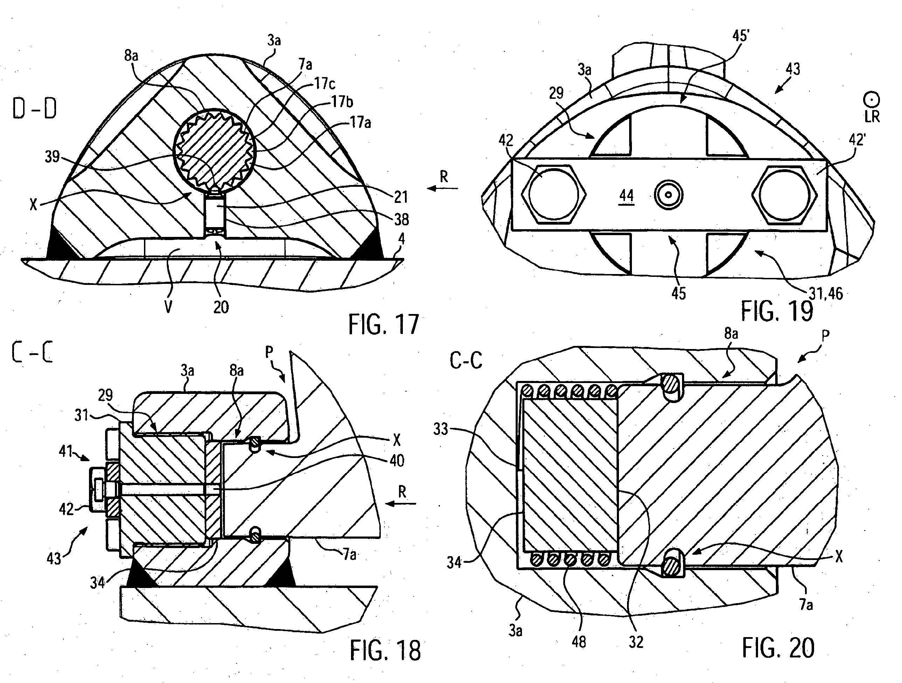

Figur 17 zeigt ein weiteres Ausführungsbeispiel der erfindungsgemäßen Vorrichtung wobei für Elemente, die in Funktion und/oder Aufbau den Elementen der Ausführungsbeispiele der Figuren 1 bis 16 entsprechen, dieselben Bezugszeichen verwendet werden. Der Kürze halber wird lediglich auf die Unterschiede zu den Ausführungsbeispielen der bisherigen Figuren eingegangen.

Der Befestigungsbock 3a und der Haltezapfen 7a sind entlang der in der Figur 3 gezeigten Ebene D-D geschnitten dargestellt. Der Haltezapfen 7a weist wenigstens abschnittsweise einen zahnradförmigen Querschnitt auf, wobei die zwischen den Zähnen angeordneten Täler Teilvolumina 17a, 17b, 17c usw. ausbilden, die am Umfang des Haltezapfens 7a verteilt sind. Die Zähne können wenigstens teilweise in der Vertiefung 15 des Haltezapfens 7a angeordnet sein, so dass die Teilvolumina 17a, 17b, 17c usw. in und/oder entgegen der Einsteckrichtung R durch die wenigstens teilweise parallel zur Schwenkrichtung S verlaufenden Wandabschnitte 22, 25 begrenzt sind. Zumindest wenn der Haltezapfen 7a entgegen der Einsteckrichtung R aus der Halteaufnahme 8a herausbewegt werden soll und die Teilvolumina 17a, 17b, 17c usw. wenigstens durch den Wandabschnitt 22 begrenzt sind, dient dieser als Anschlag für das Halteelement 21 und sichert den Haltezapfen 7a zusammen mit dem Halteelement 21 in seiner Arbeitsposition P.

Das Teilvolumen 20 des Befestigungsbocks 3a ist als eine hohlzylindrische und radial zur Halteaufnahme 8a ausgebildete Aufnahmeöffnung 38 ausgebildet, die das freie Volumen V mit der Halteaufnahme 8a verbindet. Das Halteelement 21 ist in der Aufnahmeöffnung 38 im Wesentlichen unverschieblich angeordnet, ragt mit einem Ende 39 in die Halteaufnahme 8a und greift in eines der Teilvolumina des Haltezapfens 7a ein. Das Ende 39 des Halteelements 21 ist elastisch in Richtung auf das Volumen V zu auslenkbar.

Beispielsweise kann das Halteelement 21 dieses Ausführungsbeispiels als eine Kugelkopfschraube ausgebildet sein, deren Kugelkopf federnd gelagert ist und in eines der Teilvolumina des Haltezapfens 7a ragt. Wird die Ringlasche 2 geschwenkt, drücken die Zähne den Kugelkopf in die Kugelkopfschraube ein, der im Folgenden in das nächste Teilvolumen zurückspringt. Das Halteelement 21 kann wasserdicht mit der Aufnahmeöffnung 38 verbunden und das Volumen V auch hier hermetisch abgeschlossen sein.

Figuren 18, 19 zeigen ein weiteres Ausführungsbeispiel der erfindungsgemäßen Vorrichtung, wobei für Elemente, die in Funktion und/oder Aufbau den Elementen der Ausführungsbeispiele der Figuren 1 bis 17 entsprechen, dieselben Bezugszeichen verwendet werden. Der Kürze halber wird lediglich auf die Unterschiede zu den Ausführungsbeispielen der bisherigen Figuren eingegangen.

Fig. 18 zeigt den Befestigungsbock 3a und den Haltezapfen 7a schematisch in einer entlang der in der Figur 2 dargestellten Ebene C-C geschnitten. Die Wartungsöffnung 29 weist einen größeren Durchmesser auf als die Halteaufnahme 8a. Somit kann die Gleitscheibe 34 oder die hier nicht dargestellte Gleitbuchse 37 durch die Wartungsöffnung 29 entnommen werden. Zur einfachen Entnahme der Gleitscheibe 34 weist diese eine parallel zur Einsteckrichtung R verlaufende Belüftungsöffnung 40 auf, durch die auch Schmiermittel durchtreten kann.

Da auf die Gleitscheibe 34 im Betrieb nicht unwesentliche, in Einsteckrichtung R wirkende Kräfte lasten können, ist die Gleitscheibe 34 durch ein in der Wartungsöffnung 29 angeordnetes Verschlusselement 41 gesichert. Das Verschlusselement 41 ist als eine Verschlussschraube 31 gezeigt und kann durch weitere Befestigungsschrauben 42 mit dem Befestigungsbock 3a fest verbunden sein. Die auf die Verschlussschraube 31 wirkenden Kräfte und Momente werden über eine Kreuzverzahnung 43 an die Befestigungsschrauben 42 geleitet.

Fig. 19 zeigt den Befestigungsbock 3a in einer entgegen der Einsteckrichtung R weisenden Seitenansicht. Die in dieser Ansicht dargestellten Befestigungsschrauben 42, 42' sind mit dem Befestigungsbock 3a verschraubt und fixieren einen Riegel 44, der vorzugsweise plan auf der eben ausgestalteten Außenseite 30 des Befestigungsbocks 3a aufliegt. Die Verschlussschraube 31 weist zwei kreuzförmig zueinander verlaufende Fixierkanäle 45, 45' auf, die in einem aus der Wartungsöffnung 29 in Einsteckrichtung R herausragenden Kopf 46 der Verschlussschraube 31 ausgestaltet sind. Der Riegel 44 greift in den parallel zum hier nicht gezeigten Gut 4 verlaufenden Fixierkanal 45 ein.

Durch den Riegel 44 und den Fixierkanal 45 ist die Verschlussschraube 31 gegen ungewollte Verdrehungen gesichert. Wenn der Haltezapfen 7a die Verschlussschraube 31 zu verdrehen sucht, kann diese sich nicht nennenswert verdrehen, da wenigstens einer der die Fixierkanäle 45, 45' zumindest abschnittsweise flankierenden Fixiererhebungen 47a bis 47d gegen den Riegel 44 stößt, der jedoch durch die Befestigungsschrauben 42, 42' unbeweglich mit dem Befestigungsbock 3a verbunden ist.

Figur 20 zeigt eine weiteres Ausführungsbeispiel der Erfindung, wobei für Elemente, die in Funktion und/oder Aufbau den Elementen der Ausführungsbeispiele der Figuren 1 bis 19 entsprechen, dieselben Bezugszeichen verwendet werden. Der Kürze halber wird lediglich auf die Unterschiede zu den Ausführungsbeispielen der bisherigen Figuren eingegangen.

Der Befestigungsbock 3a und der Haltezapfen 7a sind auch hier entlang der in der Figur 2 gezeigten Ebene C-C geschnitten. Der Haltezapfen 7a ist in seiner Arbeitsposition P in der Halteaufnahme 8a angeordnet. Ein vorgespanntes Federelement 48 drückt gegen das freie Ende 32 des Haltezapfens 7a und stützt sich auf dem Grund 33 der Halteaufnahme 8a ab. Am freien Ende 32 des Haltezapfens 7a liegt die Gleitscheibe 34 an, die im Inneren des als Spiralfeder ausgebildeten Federelements 48 angeordnet ist. Das Federelement 48 erhöht die Reibung zwischen dem Halteelement 21 und dem Befestigungsbock 3a sowie dem Haltezapfen 7a, wodurch auch eine schwere Ringlasche 2 nicht ungewollt verkippen kann. Die Gleitscheibe 34 begrenzt auch hier die Beweglichkeit des Haltezapfens 7a in Einsteckrichtung R und verhindert hierdurch eine Überlastung des Federelements 48.

Die beschriebenen Ausführungsformen des Befestigungsbocks 3a sowie des Haltezapfens 7a können auch auf den Befestigungsbock 3b und den Haltezapfen 7b angewendet werden.

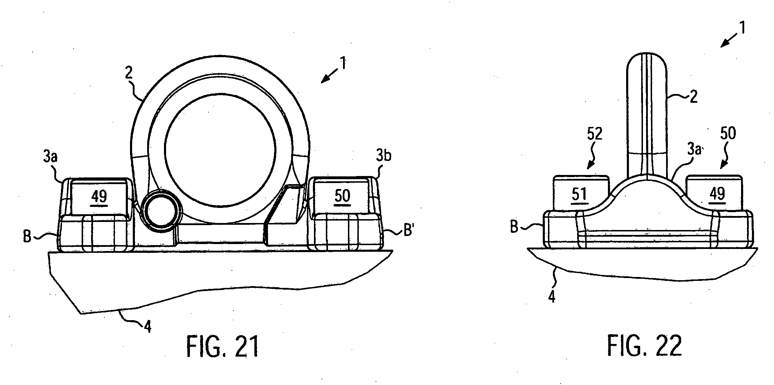

Die Figuren 21 und 22 zeigen ein weiteres Ausführungsbeispiel der erfindungsgemäßen Vorrichtung, wobei für Elemente, die in Funktion und/oder Aufbau den Elementen der Ausführungsbeispiele der Figuren 1 bis 20 entsprechen, dieselben Bezugszeichen verwendet werden. Der Kürze halber wird lediglich auf die Unterschiede zu den Ausführungsbeispielen der bisherigen Figuren eingegangen.

In der Figur 21 ist der Ringbock 1 in der auch in der Figur 1 dargestellten Frontalansicht gezeigt. Die Figur 22 zeigt den Ringbock 1 in einer Seitenansicht. Die Befestigungsbereiche B, B' der Befestigungsböcke 3a, 3b sind über Verbindungsschrauben 49 bis 52 am Gut 4 befestigt. Hierzu weisen die Befestigungsbereiche B, B' vom Gut 4 weg weisende Aufnahmen für die Verbindungsschrauben 49 bis 52 auf. Um genug Raum für die Aufnahmen der Verbindungsschrauben 49 bis 52 zu schaffen und dennoch ausreichend Material zur Ausbildung lastfester Befestigungsbereiche B, B' zu erhalten, erstrecken sich die Befestigungsbereiche B, B' parallel zum Gut 4 und von den Halteaufnahmen 8a, 8b weg.

## Patentansprüche

1. Vorrichtung zum Anschlagen, Heben und/oder Zurren von Gütern, mit einem Ringbock (1), der eine Ringlasche (2) mit zwei Haltezapfen (7a, 7b) und zwei an einem Gut (4) befestigbare Befestigungsböcke (3a, 3b) mit jeweils einer Halteaufnahme (8a, 8b), in denen die Ringlasche (2) über ihre Haltezapfen (7a, 7b) gehalten ist, aufweist, **gekennzeichnet durch** wenigstens eine Axialsicherung (X), **durch** welche der Haltezapfen (7a, 7b) in einer vorbestimmten axialen Arbeitsposition (P) in der Halteaufnahme (8a, 8b) gesichert ist.

2. Vorrichtung nach Anspruch 1, **dadurch gekennzeichnet, dass** der Haltezapfen (7a, 7b) und die Halteaufnahme (8a, 8b) über die Axialsicherung (X) miteinander verrastet sind.

3. Vorrichtung nach Anspruch 1 oder 2, **dadurch gekennzeichnet, dass** die Axialsicherung (X) ein Halteelement (21) und ein im Haltezapfen (7a, 7b) und/oder im Befestigungsbock (3a, 3b) ausgebildetes Aufnahmevolumen (A) aufweist, in dem das Halteelement (21) in der Arbeitsposition (P) aufgenommen ist.

4. Vorrichtung nach Anspruch 3, **dadurch gekennzeichnet, dass** das Halteelement (21) bei einer Bewegung des Haltezapfens (7a, 7b) aus der Halteaufnahme (8a, 8b) heraus eine der Bewegung entgegenwirkende Haltekraft aufbringt und diese in den Befestigungsbock (3a, 3b) einleitet.

5. Vorrichtung nach einem der Ansprüche 3 bis 4, **dadurch gekennzeichnet, dass** das Halteelement (21) elastisch verformbar ist.

6. Vorrichtung nach einem der Ansprüche 3 bis 5, **dadurch gekennzeichnet, dass** das Halteelement (21) bei Überschreiten einer vorgegebenen Axialkraft in eine in einem Aufnahmevolumen (A) angeordnete Sicherungsstellung überführbar ist.

7. Vorrichtung nach einem der Ansprüche 1 bis 6, **dadurch gekennzeichnet, dass** der Haltezapfen (7a, 7b) um seine Längsachse (13) rotierbar in der Halteaufnahme (8a, 8b) angeordnet ist.

8. Vorrichtung nach Anspruch 7, **dadurch gekennzeichnet, dass** die Axialsicherung (X) wenigstens teilweise form- oder reibschlüssig und eine der Rotation des Haltezapfens (7a, 7b) entgegengerichtete Kraft aufbringend mit der Ringlasche (2) verbunden ist.

9. Vorrichtung nach einem der Ansprüche 1 bis 8, **dadurch gekennzeichnet, dass** die Ringlasche (2) und/oder zumindest einer der Befestigungsböcke (3a, 3b) Winkelmarkierungen (11a-11m) aufweisen, die in einem vorgegebenen Abstand voneinander und/oder von einem Randbereich der Ringlasche (2) und/oder des Befestigungsbocks (3a, 3b) angeordnet sind.

10. Vorrichtung nach einem der Ansprüche 1 bis 9, **dadurch gekennzeichnet, dass** in der Halteaufnahmen (8a, 8b) ein einem freien Ende (32) des Haltezapfens (7a, 7b) gegenüberliegendes Gleitorgan angeordnet ist.

11. Vorrichtung nach Anspruch 10, **dadurch gekennzeichnet, dass** das Gleitorgan als eine aus Aluminium-Mehrstoffbronze gefertigte Gleitscheibe (34) ausgebildet ist.

12. Vorrichtung nach Anspruch 10, **dadurch gekennzeichnet, dass** das Gleitorgan als eine aus Aluminium-Mehrstoffbronze gefertigte Gleitbuchse (37) ausgestaltet ist, in der der Haltezapfen (7a, 7b) arretierbar ist.

13. Vorrichtung nach einem der Ansprüche 10 bis 12, **dadurch gekennzeichnet, dass** der Befestigungsbock (3a, 3b) mit einer Wartungsöffnung (29) ausgebildet ist, durch die das Gleitorgan im montierten Zustand des Ringbocks (1) entnehmbar ist.

14. Vorrichtung nach einem der Ansprüche 1 bis 13, **dadurch gekennzeichnet, dass** die Befestigungsböcke (3a, 3b) mit umlaufenden Befestigungsbereichen (B, B') ausgebildet und in diesen durchgängig mit dem Gut (4) verschweißt sind.

15. Vorrichtung nach einem der Ansprüche 1 bis 14, **dadurch gekennzeichnet, dass** die Vorrichtung zumindest einen Befestigungsstift (27, 28) umfasst, der im montierten Zustand des Ringbocks (1) die Befestigungsböcke (3a, 3b) unverschieblich miteinander verbindet.

16. Verfahren zum Montieren einer Vorrichtung nach einem der Ansprüche 1 bis 15, **dadurch gekennzeichnet, dass** wenigstens einer der Haltezapfen (7a, 7b) in axialer Richtung in einer der Halteaufnahmen (8a, 8b) festgelegt wird.

## Claims

1. Device for attaching, lifting, and/or lashing goods, comprising a load ring (1) which has a ring lug (2) having two retaining pins (7a, 7b) and has two fixing frames (3a, 3b) that can be fixed to goods (4) and that each have a retaining receptacle (8a, 8b) in which the ring lug (2) is held by way of its retaining pins (7a, 7b), **characterised by** at least one axial securing element (X) by means of which the retaining pin (7a, 7b) is secured in the retaining receptacle (8a, 8b) in a predetermined axial working position (P).

2. Device according to claim 1, **characterised in that** the retaining pin (7a, 7b) and the retaining receptacle (8a, 8b) are latched to each other by means of the axial securing element (X).

3. Device according to either claim 1 or claim 2, **characterised in that** the axial securing element (X) has a retaining element (21) and a reception volume (A) formed in the retaining pin (7a, 7b) and/or in the fixing frame (3a, 3b), in which reception volume the retaining element (21) is held in the working position (P).

4. Device according to claim 3, **characterised in that**, when the retaining pin (7a, 7b) moves out of the retaining receptacle (8a, 8b), the retaining element (21) applies a retaining force that counteracts the movement and introduces this into the fixing frame (3a, 3b).

5. Device according to any of claims 3 and 4, **characterised in that** the retaining element (21) is elastically deformable.

6. Device according to any of claims 3 to 5, **characterised in that** the retaining element (21) can be transferred into a securing position arranged in a reception volume (A) when a predefined axial force is exceeded.

7. Device according to any of claims 1 to 6, **characterised in that** the retaining pin (7a, 7b) is arranged in the retaining receptacle (8a, 8b) in such a way that it can be rotated about its longitudinal axis (13).

8. Device according to claim 7, **characterised in that** the axial securing element (X) is connected to the ring lug (2) at least in part in an interlocking or friction-locking manner and in a manner that applies a force opposite to the rotation of the retaining pin (7a, 7b).

9. Device according to any of claims 1 to 8, **characterised in that** the ring lug (2) and/or at least one of the fixing frames (3a, 3b) has angle markings (11 a-11 m) that are arranged at a predefined distance from each other and/or from an edge region of the ring lug (2) and/or of the fixing frame (3a, 3b).

10. Device according to any of claims 1 to 9, **characterised in that** a sliding instrument lying opposite a free end (32) of the retaining pin (7a, 7b) is arranged in the retaining receptacle (8a, 8b).

11. Device according to claim 10, **characterised in that** the sliding instrument is formed as a sliding disc (34) manufactured from aluminium multi-component bronze.

12. Device according to claim 10, **characterised in that** the sliding instrument is formed as a slide bush (37) manufactured from aluminium multi-component bronze, in which slide bush the retaining pin (7a, 7b) can be arrested.

13. Device according to any of claims 10 to 12, **characterised in that** the fixing frame (3a, 3b) is formed with a maintenance opening (29) through which the sliding instrument can be removed when the load ring (1) is in the mounted state.

14. Device according to any of claims 1 to 13, **characterised in that** the fixing frames (3a, 3b) are formed with circumferential fixing regions (B, B') and are continuously welded to the goods (4) in these regions.

15. Device according to any of claims 1 to 14, **characterised in that** the device comprises at least one fixing pin (27, 28) that interconnects the fixing frames (3a, 3b) in a non-displaceable manner when the load ring (1) is mounted.

16. Method for mounting a device according to any of claims 1 to 15, **characterised in that** at least one of the retaining pins (7a, 7b) is immobilised in one of the retaining receptacles (8a, 8b) in the axial direction.

## Revendications

1. Dispositif pour élinguer, lever et/ou amarrer des marchandises à l'aide d'un système à anneau de levage (1), qui comprend un anneau (2) avec deux tourillons de support (7a, 7b) et deux blocs de fixation (3a, 3b) pouvant être fixés sur une marchandise (4) et dont chacun présente un logement de maintien (8a, 8b), logements de maintien dans lesquels est maintenu l'anneau (2) par l'intermédiaire de ses tourillons de support (7a, 7b), **caractérisé par** au moins un système d'arrêt axial de sécurité (X) assurant l'arrêt axial du tourillon de support (7a, 7b) dans une position de travail (P) prédéterminée dans le logement de maintien (8a, 8b).

2. Dispositif selon la revendication 1, **caractérisé en ce que** le tourillon de support (7a, 7b) et le logement de maintien (8a, 8b) sont encliquetés mutuellement par l'intermédiaire du système d'arrêt axial de sécurité (X).

3. Dispositif selon la revendication 1 ou la revendication 2, **caractérisé en ce que** le système d'arrêt axial de sécurité (X) comprend un élément de maintien (21) et un volume d'accueil (A), qui est formé dans le tourillon de support (7a, 7b) et/ou dans le bloc de fixation (3a, 3b), et dans lequel est logé l'élément de maintien (21) dans la position de travail (P).

4. Dispositif selon la revendication 3, **caractérisé en ce que** l'élément de maintien (21), lors d'un mouvement du tourillon de support (7a, 7b) dans le sens d'une sortie du logement de maintien (8a, 8b), exerce une force de maintien agissant à l'encontre dudit mouvement, et la transmet au bloc de fixation (3a, 3b).

5. Dispositif selon l'une des revendications 3 à 4, **caractérisé en ce que** l'élément de maintien (21) est déformable élastiquement.

6. Dispositif selon l'une des revendications 3 à 5, **caractérisé en ce que** l'élément de maintien (21), lors du dépassement d'une force axiale prédéterminée, peut être transféré dans une position d'arrêt de sécurité agencée dans le volume d'accueil (A).

7. Dispositif selon l'une des revendications 1 à 6, **caractérisé en ce que** le tourillon de support (7a, 7b) est agencé de manière rotative autour de son axe longitudinal (13) dans le logement de maintien (8a, 8b).

8. Dispositif selon la revendication 7, **caractérisé en ce que** le système d'arrêt axial de sécurité (X) est relié à l'anneau (2), au moins partiellement par complémentarité de formes et de manière à appliquer une force opposée à la rotation du tourillon de support (7a, 7b).

9. Dispositif selon l'une des revendications 1 à 8, **caractérisé en ce que** l'anneau (2) et/ou au moins l'un des blocs de fixation (3a, 3b) présentent des marquages d'angle (11a - 11m), qui sont agencés à une distance d'espacement prédéterminée les uns des autres et/ou d'une zone de bordure de l'anneau (2) et/ou du bloc de fixation (3a, 3b).

10. Dispositif selon l'une des revendications 1 à 9, **caractérisé en ce que** dans le logement de maintien (8a, 8b) est agencé un organe de glissement opposé à une extrémité libre (32) du tourillon de support (7a, 7b).

11. Dispositif selon la revendication 10, **caractérisé en ce que** l'organe de glissement est réalisé sous la forme d'un disque de glissement (34) fabriqué en un bronze d'aluminium à plusieurs composants.

12. Dispositif selon la revendication 10, **caractérisé en ce que** l'organe de glissement est réalisé sous la forme d'un coussinet de glissement (37) fabriqué en bronze d'aluminium à composants multiples, et dans lequel peut être assuré l'arrêt du tourillon de support (7a, 7b).

13. Dispositif selon l'une des revendications 10 à 12, **caractérisé en ce que** le bloc de fixation (3a, 3b) est conçu avec une ouverture d'entretien (29) par laquelle peut être prélevé l'organe de glissement, dans l'état monté du système à anneau de levage (1).

14. Dispositif selon l'une des revendications 1 à 13, **caractérisé en ce que** les blocs de fixation (3a, 3b) sont pourvus de zones de fixation périphériques (B, B') et sont soudés en continu, au niveau de celles-ci, à la marchandise (4).

15. Dispositif selon l'une des revendications 1 à 14, **caractérisé en ce que** le dispositif comporte au moins une broche de fixation (27, 28), qui, dans l'état monté du système à anneau de levage (1), relie les blocs de fixation (3a, 3b) de manière non coulissante.

16. Dispositif selon l'une des revendications 1 à 15, **caractérisé en ce que** l'un au moins des tourillons de support (7a, 7b) est fixé dans la direction axiale, dans l'un des logements de maintien (8a, 8b).
